# EUROPEAN PATENT APPLICATION

(11) **EP 4 531 176 A1**
(43) Date of publication of application: **02.04.2025**
(21) Application number: 23200593.4
(22) Date of filing: 28.09.2023
(51) Int. Cl.: H01M 50/204, H01M 50/282, H01M 50/289, H01M 50/30

(54) **BATTERY SYSTEM WITH IMPROVED STRUCTURAL INTEGRITY**

(71) Applicant: Samsung SDI Co., Ltd., Yongin-si, Gyeonggi-do 17084 (KR)
(72) Inventor: Reinprecht, Wolfgang, 8144 Attendorf (AT); Reinprecht, Stefan, 8144 Attendorf (AT)
(74) Representative: Gulde & Partner

(57) **Abstract**

The present disclosure refers to a battery system (100), comprising a housing accommodating a plurality of battery cells (12) which are arranged to form one or more battery packs, wherein each of the battery cells (12) includes, at a top side (12a) and/or at a bottom side (12b) thereof, a venting side (13) with a venting exit (14) to exit a venting gas stream from the battery cells (12), a bottom plate (30) covering the bottom sides (12) of the battery cells (12), at least one crossbeam (18) separating neighboring battery cells (12) of the plurality of battery cells (12), the crossbeam (18) arranged with a lower end thereof on the bottom plate (30) and extending from the bottom plate (30) to the top sides (12a) of the neighboring battery cells (12), and a rigid cover plate (20) extending from one of the neighboring battery cells (12) over the crossbeam (18) to the other one of the neighboring battery cells (12) so as to cover an upper end of the crossbeam (18) and to cover at least partly the top sides (12a) of the neighboring battery cells (12), wherein the cover plate (20) is fixed to the crossbeam (18) via first fixation member (40).

## Description

### Field of the Disclosure

The present disclosure relates to a battery system which, due to an improved structural integrity, more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable or secondary battery differs from a primary battery in that it is designed to be repeatedly charged and discharged, while the latter is designed to provide only an irreversible conversion of chemical to electrical energy. Low-capacity rechargeable batteries are used as a power supplies for small electronic devices, such as cellular phones, notebook computers and camcorders, while high-capacity rechargeable batteries are used as a power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (XsYp).

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

Mechanical integration of such a battery pack incorporates suitable mechanical connections between the individual components of, for example, battery modules, and between them and a supporting structure of the vehicle. These connections are designed to remain functional and save throughout the average service life of the battery system. Further, installation space and interchangeability standards must be met, especially in mobile applications.

Mechanical integration of battery modules may be achieved by providing a carrier framework and by positioning the battery modules thereon. Fixing the battery cells or battery modules may be achieved by using fitted depressions in the framework or by mechanical interconnectors, such as bolts or screws. In other example, the battery modules are confined by fastening side plates to lateral sides of the carrier framework. Further, cover plates may be fixed atop and below the battery modules.

The carrier framework of the battery pack is mounted to a carrying structure of the vehicle. When the battery pack is fixed at the bottom of the vehicle, the mechanical connection may be established from the bottom side by for example bolts passing through the carrier framework of the battery pack. The framework is generally made of aluminum or an aluminum alloy to lower the total weight of the construction.

A thermal management system may be used to provide thermal control of the battery pack to safely use the battery module by efficiently emitting, discharging and/or dissipating heat generated from its rechargeable batteries. If the heat emission/discharge/dissipation is not sufficiently performed, temperature deviations may occur between respective battery cells, such that the battery module may no longer generate a desired amount of power. In addition, an increase of the internal temperature can lead to abnormal reactions occurring in the battery cells, and thus, charging and discharging performance of the rechargeable batteries deteriorates and the life-span of the rechargeable batteries is shortened.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. These exothermic reactions include combustion of flammable gas compositions within the battery pack housing. For example, when a cell is heated above a critical temperature (typically above 150°C) the battery cell can transition into a thermal runaway. The initial heating may be caused by a local failure, such as a battery cell internal short circuit, heating from a defect electrical contact, short circuit to a neighboring battery cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

The battery cells of known battery systems are usually insulated with plastic foils providing the required electrical insulation towards the side walls and bottom within normal operating temperatures of up to 150°C. The battery cells are squeezed or glued into the cell compartment of the battery housing towards the bottom and sidewalls, whereas the top side of the battery cells is usually uncovered. During a heat-up of a damaged battery cell, caused e.g. by a thermal runaway inside the battery cell, the plastic insulation may melt with the consequence of loss of mechanical fixation. For example, the glue between the battery cell and the compartment may lose its fixation capabilities already at 300°C which allows the battery cell to move, especially when the battery cell ejected already a part of its content/components during the thermal runaway.

The housing of a battery cell usually consists of aluminum with a rather low melting point (ca. 550°C) in comparison to the generated temperatures (up to 1000°C) inside the battery cell during a thermal runaway event. Thus, high pressures and temperature gradients occurring in such situations may cause the battery cell to burst open at unwanted locations, i.e. at a location other than the dedicated burst plates of the venting exits. This can lead to contamination of the top side of the battery cells causing arcing and thermal propagation and thus the propagation of the thermal runaway event to the remaining battery cells.

It is thus an object of the present invention to overcome or reduce at least some of the drawbacks of the prior art and to provide a battery system which more securely handles a thermal runaway of one or more of its battery cells without damaging components of the battery system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system for an electric vehicle includes a housing accommodating a plurality of battery cells which are arranged to form one or more battery packs, wherein each of the battery cells includes, at a top side and/or at a bottom side thereof, a venting side with a venting exit to exit a venting gas stream from the battery cells, a bottom plate covering the bottom sides of the battery cells, at least one crossbeam separating neighboring battery cells of the plurality of battery cells, the crossbeam arranged with a lower end thereof on the bottom plate and extending from the bottom plate to the top sides of the neighboring battery cells, and a cover plate extending from one of the neighboring battery cells over the crossbeam to the other one of the neighboring battery cells so as to cover an upper end of the crossbeam and to cover at least partly the top sides of the neighboring battery cells, wherein the cover plate is fixed to the crossbeam via a first fixation member.

According to an aspect of the present disclosure, the bottom plate is fixed to the crossbeam via a second fixation member. According to a respective aspect of the present disclosure, the second fixation member includes one or more of the following: bolts, screws.

According to an aspect of the present disclosure, the first fixation member include one or more of the following: bolts, screws.

According to an aspect of the present disclosure, the cover plate also covers electrode terminals of the neighboring battery cells, the electrode terminals arranged at the top sides of the neighboring battery cells.

According to an aspect of the present disclosure, the cover plate is fixed, e.g., glued to the top sides of the neighboring battery cells.

According to an aspect of the present disclosure, the cover plate is adapted to the contour of the top side of the battery cells and the upper end of the crossbeam.

According to an aspect of the present disclosure, the cover plate includes a mechanically rigid structural layer and a first thermal insulation layer. According to a respective aspect of the present disclosure, the first thermal insulation layer includes a woven fabric, the woven fabric preferably including glass fibers, basalt fibers and/or mica fibers, and a matrix support material, preferably a resin.

According to an aspect of the present disclosure, the battery system includes a second thermal insulation layer arranged between the crossbeam and one of the adjacent battery cells. According to a respective aspect of the present disclosure, the second thermal insulation layer includes a woven fabric, the woven fabric preferably including glass fibers, basalt fibers and/or mica fibers, and a matrix support material, preferably a resin.

According to an aspect of the present disclosure, the structural layer is a metal layer, for example, a steel layer.

According to an aspect of the present disclosure, the cover plate fully covers the top sides of the battery cells. According to a respective aspect of the present disclosure, the venting sides are arranged at the top sides of the battery cells, the cover plate comprising venting openings aligned with the venting exits of the battery cells for letting the venting gas stream pass through the cover plate.

Yet another aspect of the present disclosure refers to an electric vehicle comprising the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:

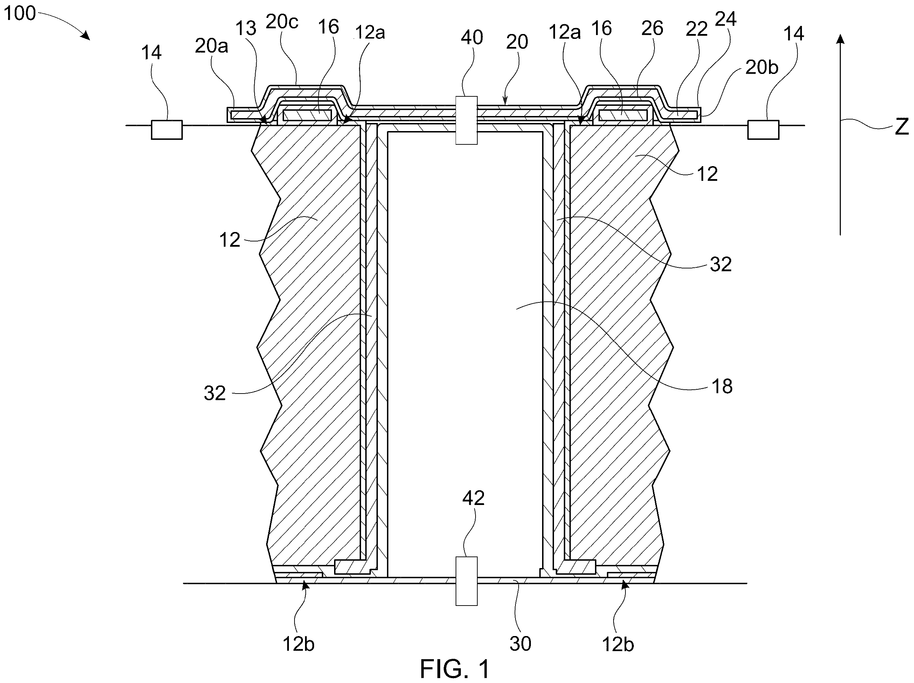

- Fig. 1: illustrates a schematic cross view of a battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" as well as "top side" and "bottom side" are defined according to the z-axis. For example, the top side of a battery cell is positioned at the upper part of the z-axis, whereas the bottom side of the battery cell is positioned at the lower part thereof. These terms may refer to the intended installation of the battery system inside an electric vehicle. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a housing and a plurality of battery cells accommodated inside the housing. The housing thus forming a battery housing. The housing may also be considered as a cell compartment for the battery cells. The battery cells may be interconnected via one or more electrical connecting members, e.g. busbars, contacting respective electrode/cell terminals of the battery cells to form one or more battery modules/battery packs. The battery cells are arranged to form one or more battery packs, wherein in a battery pack the battery cells are electrically interconnected e.g. in a series and/or in parallel as explained above. Multiple of these battery packs may form a battery module. Two or more of the battery packs may be stacked to form cell stacks. The battery cells may e.g. be prismatic or cylindrical cells. Each of the battery cells includes a top side at an upper end of the battery cell and a bottom side at a lower end of the battery cell. Each of the battery cells includes a venting exit at a venting side of the battery cell, for example, at the terminal side of the battery cells, the venting exits allowing a venting gas stream to escape the battery cells during a thermal runaway. Thus, the venting exits are to exit a venting gas stream from the battery cells. Venting valves may be provided at the venting exits. The venting side may be the top side and/or the bottom side of the battery cells, i.e. venting exits may be provided at the top side and/or the bottom side of the battery cells.

The battery system further includes a mechanically rigid bottom plate. The bottom plate covers the bottom sides of the battery cells. In other words, the battery cells of the plurality of battery cells are arranged, with their bottom sides, on the bottom plate. The battery cells are arranged or disposed on the bottom plate. For example, the battery cells are standing on the bottom plate. The bottom plate is arranged at the lower end of the battery cells, i.e. the battery cells are arranged on the bottom plate with their bottom side. The bottom sides of the battery cells may thus be in contact with the bottom plate. The bottom plate is mechanically rigid meaning that the bottom plate is devoid of flexibility. In other words, the bottom plate is stiff and unyielding at least with respect to forces commonly occurring during a thermal runaway of one or more of the battery cells. That is, the bottom plate is mechanically rigid such that it may withstand forces commonly occurring during a thermal runaway of one or more of the battery cells without substantially bending and/or without breaking and/or such that the bottom plate may stay structurally integrated with the further components of the battery system, e.g. the crossbeam and/or housing to which the bottom plate may be fixed. The rigidity can be achieved by a suitable choice of material, e.g. steel, and/or material thickness. For example, the bottom plate extends along the whole/complete bottom side of the battery cells. The bottom plate may, if the venting side of the battery cells is the bottom side, include venting openings aligned with the venting exits of the battery cells to let the venting gas stream pass through the bottom plate. The bottom plate is adapted to withstand the temperatures usually occurring during a thermal runaway, i.e. temperatures of at least 700° C, or of at least or up to 1000° C. A cooling element may be arranged at the bottom plate or the bottom plate may serve as a cooling element for cooling the battery cells during normal operation.

The battery system further includes one or more crossbeams separating neighboring battery cells of the plurality of battery cells. In some embodiment, the crossbeam may separate neighboring cells of different battery packs. The crossbeam is arranged or disposed with a lower end thereof on the bottom plate. The crossbeam may extend from the bottom plate to the top sides of the neighboring battery cells. The crossbeam extends up until the position of the top sides of the battery cells. In other words, a top side of the crossbeam and the top sides of the neighboring battery cells may have the same height and/or the same position on a z-axis. As the crossbeam is arranged on the bottom plate, the bottom plate may be considered to extend from one of the neighboring battery cells under the crossbeam to the other one of the neighboring battery cells so as to cover the lower end of the crossbeam. Also, the bottom plate may be considered to cover at least partly the bottom sides of the neighboring battery cells. The bottom plate may thus be considered a lower cover covering the crossbeam and the neighboring battery cells, for example, all the battery cells, at least all the battery cells of one of the battery packs. The crossbeam may alternatively be named a crossbar. The crossbeam may be considered part of the housing, for example, part of the cell compartment of the battery system. The crossbeam constitutes a structural component of the battery system giving structural integrity to the battery system. The crossbeam may be (structurally) connected to the housing. The crossbeam may be made of aluminum.

The battery system further includes a cover plate covering at least part of the top side of the battery cells and (fully) covering the upper end/top side of the crossbeam. The cover plate extends from a first one of the neighboring battery cells to the second one of the neighboring battery cells thereby spanning the crossbeam. The cover plate may be considered an upper cover. The battery system may include multiple of such cover plates, for example, a cover plate for each arrangement of neighboring battery cells with a crossbeam in-between. Alternatively, the cover plate may cover multiple battery cells and one or more crossbeams. In some embodiment, the cover plate may cover all of the battery cells of the battery system and any crossbeams in-between. The cover plate may, if the venting side of the battery cells is the top side, include venting openings aligned with the venting exits of the battery cells to let the venting gas stream pass through the cover plate. The cover plate is mechanically rigid in the same sense as the bottom plate as explained above. Thus, the cover plate is mechanically rigid meaning that the cover plate is devoid of flexibility. In other words, the cover plate is stiff and unyielding at least with respect to forces commonly occurring during a thermal runaway of one or more of the battery cells. That is, the cover plate is mechanically rigid such that it may withstand forces commonly occurring during a thermal runaway of one or more of the battery cells without substantially bending and/or without breaking and/or such that the cover plate may stay structurally integrated with the further components of the battery system, i.e. the crossbeam to which the cover plate is fixed and optionally the housing to which the cover plate may be fixed. The rigidity can be achieved by a suitable choice of material, e.g. steel, and/or material thickness. The cover plate may be adapted to withstand the temperatures usually occurring during a thermal runaway, i.e. temperatures of at least 700° C, or at least 1000° C. According to the invention, the cover plate is fixed to the crossbeam via one or more first fixation members. In other words, a first fixation member is provided which (fixedly) attaches the cover plate to the at least one crossbeam. The fixation member may be introduced through the cover plate from its outer surface and into the crossbeam. The fixation member may fix the cover plate to the crossbeam in a force-and/or form-fitting manner. The cover plate may be fixed via such a fixation member to multiple or all of the crossbeams, if the battery system includes multiple crossbeams.

Thus, according to the invention, both the bottom plate and the cover plate are mechanically rigid and both span the crossbeam, wherein at least the cover plate is mechanically fixed to the crossbeam. This structure achieves a secure fixation of the battery cells inside the battery compartment/housing, for example, in a vertical direction. In other words, a vertical or z-axis-fixation is provided by the bottom plate, the crossbeam and the cover plate as they are fixed together. The battery system according to the invention thus has an improved structural integrity. The inventive structure including the bottom plate, cover plate and the crossbeam may be able to withstand the pressures and temperatures occurring during a thermal runaway of one or more of the battery cells. This ensures that the battery cell experiencing the thermal runaway does not burst open at unwanted locations but that the venting gas stream leaves the cells only at the venting exits, e.g. only the dedicated burst plates of the venting exists will burst. Further, the melting of any plastic insulation present in the battery system during a thermal runaway does not impair the mechanical fixation or structural integrity. In summary, a battery system is provided which, due to an improved structural integrity, more securely handles a thermal runaway of one or more of its battery cells.

According to an embodiment, the bottom plate is fixed to the crossbeam via one or more second fixation members. In other words, a second fixation member is provided which (fixedly) attaches the bottom plate to the at least one crossbeam or the crossbeam to the bottom plate. The bottom plate may be fixed via such a fixation member to multiple or all of the crossbeams, if the battery system includes multiple crossbeams. The bottom plate may be fixed to the crossbeam in the same or a similar manner as the cover plate is fixed to the crossbeam. This further improves the structural integrity of the system. This structure achieves a secure fixation of the battery cells inside the battery compartment/housing in a vertical direction as the vertical or z-axis-fixation is provided by the bottom plate, the crossbeam and the cover plate as they are all fixed together.

According to an embodiment, the first fixation member includes one or more of the following: bolts, screws. According to an embodiment, the second fixation member includes one or more of the following: bolts, screws. Thus, bolts and/or screws may be used as fixation members. For example, one or more screws may be screwed through an upper end or top side of the cover plate into the crossbeam disposed beneath the cover plate. Similar, one or more screws may be screwed through a lower end or bottom side of the bottom plate into the crossbeam disposed above the bottom plate. Such fixation members allow for a simple and secure fixation of the cover plate and/or bottom plate and therefore of the neighboring battery cells at the crossbeam.

According to an embodiment, the neighboring battery cells include electrode terminals at their top sides, wherein the cover plate covers the electrode terminals. The electrode terminals may also be named cell terminals. In other words, the cover plate may extend above the top sides of the neighboring battery cells, spanning the areas of the top sides which include the electrode terminals. The areas of the top sides which include the electrode terminals may be arranged adjacent to the crossbeam. The electrode terminals are the electrical poles of the respective battery cell for electrical connection of the battery cell with one or more of the other battery cells. The neighboring battery cells may be interconnected with one another via one or more electrical connecting members contacting the electrode terminals of the respective battery cells. The electrical connecting members may thus span the crossbeam. The electrical connecting members may also be covered by the cover plate. The cover plate also covering the electrode terminals (and possibly the electrical connecting members) of the neighboring battery cells further improves the structural integrity and thus the ability of the system to withstand a thermal runaway. Further, the terminals are protected by the cover plate from the venting gas stream, from particles of the venting gas stream which may deposit onto the cover plate. Thus, the cover plate may cover the crossbeam, the terminals and/or any electrical connecting member in a way such that the crossbeam, the terminals and/or any electrical connecting member are shielded from venting products exhausted by at least one of the battery cells in case of a thermal runaway. This may prevent arcing between the cells.

According to an embodiment, the cover plate is fixed to the top sides of the neighboring battery cells. For example, the cover plate is glued to the top sides of the neighboring battery cells. The cover plate may be fixed to one of the neighboring battery cells, or to both of the neighboring battery cells. If the cover plate also covers the electrode terminals, the cover plate may be fixed to the top sides of the battery cells adjacent to the electrode terminals, e.g. adjacent to a side of the respective electrode terminal farther away from the crossbeam. For example, the cover plate may be fixed with a left side end thereof to the top side of a left battery cell, and may extend, from left to right, from the left side end above an electrode terminal of the left battery cell, above the crossbeam, above an electrode terminal of a right battery cell, to a right side and of the cover plate, wherein the cover plate may be fixed with the right side end to the top side of the right battery cell. Fixing the cover plate to the top sides of the neighboring battery cells further improves the structural integrity of the system. This ensures that he electrode terminals stay covered by the cover plate even during thermal runaway.

According to an embodiment, the cover plate is adapted to the contour of the top side of the battery cells and the contour of the upper end of the crossbeam. The cover plate may also be adapted to the contour of the electrode terminals and/or the electrical connecting member(s), if present. Thus, the cover plate may be adapted to the contour of the top side of the battery cells, the contour of the upper end of the crossbeam and the contour of the electrode terminals. Being adapted to the contour member that the cover plate includes a shape corresponding to the shape of the elements it covers. The contour or form of the cover plate may be adapted to the contour of all the elements it covers. In other words, the cover plate may be adapted in its three-dimensional shape to the parts it covers, e.g. the top side of the battery cells, the upper end of the crossbeam, and the electrode terminals. Such an adaptation of the cover plate to the covered parts leaves less or no access for the venting products to reach the covered parts and thus allows for a reliable shielding. Also, this further improves the structural integrity of the system.

According to an embodiment, the cover plate includes a mechanically rigid structural layer and a first thermal insulation layer. Here, the structural layer may give the cover plate its mechanical rigidity and thus the above-described properties. One or more first thermal insulation layers may be provided to provide thermal insulation from the venting gas stream. The one or more thermal insulation layers may also provide electrical insulation. The cover plate may include two first thermal insulation layers, an upper insulation layer and a lower insulation layer, wherein the structural layer is disposed in-between the upper insulation layer and the lower insulation layer. The cover plate having with such insulation layer(s) provides for a better protection of the battery cells and their terminals from the venting gas stream. Also, this may improve the structural integrity of the system due to less severe heating up of the covered components and/or the cover plate.

According to an embodiment, the battery system includes a second thermal insulation layer arranged between the crossbeam and one of the adjacent battery cells. For example, multiple such thermal insulation layers are provided. For example, the battery system may include a thermal insulation layer arranged between the crossbeam and one of the adjacent battery cells and another thermal insulation layer arranged between the crossbeam and the other one of the adjacent battery cells. The one or more thermal insulation layers may also provide electrical insulation. Thus, an insulation may be provided between the battery cells and the crossbeam. This allows for a better protection of a battery cell from a thermal runaway event occurring in a neighboring cell. Also, this may improve the structural integrity of the system due to less severe heating up of the crossbeam.

According to an embodiment, the first thermal insulation layer includes a woven fabric and a matrix support material. According to an embodiment, the second thermal insulation layer includes a woven fabric and a matrix support material. The woven fabric may include one or more of the following: glass fibers, basalt fibers, mica fibers. Mica means mica silicate minerals. The matrix support material may be or include a resin. The matrix support material provides stability to the insulation layer. One or more of the insulation layers may include or consist of an FR-4 coating or material. FR-4 is a composite material composed of woven fiberglass fabric with an epoxy resin binder that is flame resistant (or self-extinguishing) according to the National Electrical Manufacturers Association (NEMA) grade designation for glass-reinforced epoxy laminate material. Thanks to the woven fabric the insulation layer may, however, be flexible enough tightly fit to the outer surface of the adjacent components.

According to an embodiment, the structural layer is a metal layer. The structural layer may be a steel layer. The structural layer may consist of metal/steel or be mainly included of metal/steel. Metal, for example steel, is suited for providing the structural layer and thus the cover plate with stiffness and thus making the cover plate mechanically rigid. The material thickness of the structural layer may be chosen depending on the material such that the cover plate is mechanically rigid enough to withstand the above-explained forces during a thermal runaway. According to a respective embodiment, the structural layer may be a bi-metallic plate, e.g., a steel alloy. Thus, the cover plate may consist of or be mainly included of a bi-metallic composition, e.g., a steel alloy.

According to an embodiment, the cover plate fully covers the top sides of the battery cells. According to a respective embodiment, the venting sides are arranged at the top sides of the battery cells, the cover plate including venting openings aligned with the venting exits of the battery cells for letting the venting gas stream pass through the cover plate. In other words, the cover plate extends along the whole/complete top sides/venting sides of the battery cells. The cover plate may fully cover the battery cells at an upper side thereof. For example, the cover plate fully covers the venting sides of the battery cells side aside from the venting openings, so that a venting gas stream leaving one or more of the battery cells through their respective venting exits may still pass through the cover plate. The cover plate fully covering the battery cells further improves the structural integrity of the system. If the top sides include the venting sides of the battery cells, the cover plate shields the battery cells at their venting sides completely from the venting gas stream, from venting products, e.g. particles, of the venting gas stream as these can only deposit onto the cover plate not onto the battery cells.

The invention also pertains to an electric vehicle including a battery system according to the invention.

### Specific Embodiments

Fig. 1 is a cross view illustrating schematically a battery system 100 according to an embodiment of the invention. The battery system 100 includes a not-shown (battery) housing accommodating a plurality of battery cells 12. The figure shows two neighboring battery cells 12 of these battery cells. Each of the neighboring battery cells 12 includes, at a top side 12a thereof, a venting side 13 with a venting exit 14 for allowing a venting gas stream to exit the battery cells 12 during a thermal runaway. The neighboring battery cells 12 are only shown in part. Both the neighboring battery cells 12 include at their top sides 12a electrode terminals 16 for electrical connection.

The neighboring battery cells 12 are separated from each other by a crossbeam 18 which extends along the sides of the neighboring battery cells 12 in-between the neighboring battery cells 12. The neighboring battery cells 12 are arranged with their bottom sides 12b on a mechanically rigid bottom plate 30. The crossbeam 18 is arranged with its lower end/bottom side on the bottom plate 30 as well. As can be seen in the figure, the crossbeam 18 extends from the bottom plate 30 to the top sides 12a of the neighboring battery cells 12 such that an upper end/top side of the crossbeam 18 is arranged at the same position on a z-axis as the top sides 12a of the adjacent battery cells 12.

The battery system 100 further includes a mechanically rigid cover plate 20 which covers the top sides 12a of the neighboring battery cells 12, including the electrode terminals 16, and the upper end of the crossbeam 18. In the embodiment, the cover plate 20 extends, from left to right, from a left side end 20a, above the electrode terminal 16 of the left battery cell 12, above the crossbeam 18, and above the electrode terminal 16 of the right battery cell 12 and ends in a right end side 20b. The cover plate 20 is adapted to the contour of the top side 12a of the battery cells 12 and the upper end of the crossbeam 18. In the embodiment, the cover plate 20 is adapted to the contour of the electrode terminals 16 via protruding portions 20c of the cover plate 20.

The cover plate 20 is fixed to the crossbeam 18 via a first fixation member 40, for example via screws and/or bolts. The first fixation member 40 is introduced from the outer surface of the cover plate 20 and extend through the cover plate 20 into the crossbeam 18. Also, the cover plate 20 may be fixed, e.g. glued, with its left side end 20a to the below top side 12a of the left battery cell 12 and with its right side end 20b to the below top side 12a of the right battery cell 12. Further, the bottom plate 30 is fixed to the crossbeam 18 via a second fixation member 42, which may also be screws and/or bolts. The second fixation member 42 is introduced from the outer surface of the bottom plate 30 and extend through the bottom plate 30 into the crossbeam 18.

Thus, a vertical or z-axis-fixation is provided by the bottom plate 30, the crossbeam 18 and the cover plate 20 as they are fixed together. The rigidity of this structure can be greatly enhanced because the cover plate 20 and the bottom plate 30 both are mechanically rigid and both are fixed to the crossbeam 18. This structure therefore achieves a secure fixation of the battery cells 12 inside the battery compartment/housing, in a vertical z-direction. The battery system 100 according to the invention thus provides an improved structural integrity. Furthermore, the inventive structure including the bottom plate, cover plate and the crossbeam is able to withstand the pressures and temperatures occurring during a thermal runaway of one or more of the battery cells 12. This ensures that the battery cell experiencing the thermal runaway does not burst open at unwanted locations but only at dedicated burst plates of the venting exits 14.

For thermal and electrical insulation, the cover plate 20 includes upper insulation layer 24 and a lower insulation layer 26 enclosing a mechanically rigid structural layer 22. The structural layer 22 provides the cover plate 20 with its mechanical rigidity. Further, insulation layers 32 are provided on both sides of the crossbeam 18 to insulate against the adjacent battery cell 12, respectively. The insulation layers 24, 26, 32 may include a FR-4 material.

### Reference signs

- 12: battery cells
- 12a: top sides of battery cells
- 12b: bottom sides of battery cells
- 13: venting side
- 14: venting exits
- 16: electrode terminals
- 18: crossbeam
- 20: cover plate
- 20a: left side end of cover plate
- 20b: right side end of cover plate
- 20c: protruding portions of cover plate
- 22: structural layer of cover plate
- 24: upper insulation layer of cover plate
- 26: lower insulation layer of cover plate
- 30: bottom plate
- 32: insulation layers
- 40: first fixation member
- 42: second fixation member
- 100: battery system

## Claims

1. A battery system (100), comprising:
a housing accommodating a plurality of battery cells (12) which are arranged to form one or more battery packs, wherein each of the battery cells (12) comprises, at a top side (12a) and/or at a bottom side (12b) thereof, a venting side (13) with a venting exit (14) to exit a venting gas stream from the battery cells (12),
a bottom plate (30) covering the bottom sides (12b) of the battery cells (12),
at least one crossbeam (18) separating neighboring battery cells (12) of the plurality of battery cells (12), the crossbeam (18) arranged with a lower end thereof on the bottom plate (30) and extending from the bottom plate (30) to the top sides (12a) of the neighboring battery cells (12); and
a cover plate (20) extending from one of the neighboring battery cells (12) over the crossbeam (18) to the other one of the neighboring battery cells (12) so as to cover an upper end of the crossbeam (18) and to cover at least partly the top sides (12a) of the neighboring battery cells (12), wherein the cover plate (20) is fixed to the crossbeam (18) via a first fixation member (40).

2. The battery system (100) according to claim 1, wherein the bottom plate (30) is fixed to the crossbeam (18) via a second fixation member (42).

3. The battery system (100) according to claim 2, wherein the second fixation member (42) comprise one or more of the following: bolts, screws.

4. The battery system (100) according to any one of the preceding claims, wherein the first fixation member (40) comprise one or more of the following: bolts, screws.

5. The battery system (100) according to any one of the preceding claims, wherein the cover plate (20) covers electrode terminals (16) of the neighboring battery cells (12), the electrode terminals (16) arranged at the top sides (12a) of the neighboring battery cells (12).

6. The battery system (100) according to any one of the preceding claims, wherein the cover plate (20) is fixed to the top sides (12a) of the neighboring battery cells (12).

7. The battery system (100) according to any one of the preceding claims, wherein the cover plate (20) is adapted to the contour of the top side (12a) of the battery cells (12) and the upper end of the crossbeam (18).

8. The battery system (100) according to any one of the preceding claims, wherein the cover plate (20) comprises a mechanically rigid structural layer (22) and a first thermal insulation layer (24, 26).

9. The battery system (100) according to any one of the preceding claims, the battery system (100) comprising a second thermal insulation layer (32) arranged between the crossbeam (18) and one of the adjacent battery cells (12).

10. The battery system (100) according to claim 9, wherein the second thermal insulation layer (32) comprises a woven fabric, the woven fabric preferably comprising glass fibers, basalt fibers and/or mica fibers, and a matrix support material, preferably a resin.

11. The battery system (100) according to any one of claims 8 to 10, wherein the first thermal insulation layer (24, 26) comprises a woven fabric, the woven fabric preferably comprising glass fibers, basalt fibers and/or mica fibers, and a matrix support material, preferably a resin.

12. The battery system (100) according to any one of the preceding claims, wherein the structural layer (22) is a metal layer, preferably a steel layer.

13. The battery system (100) according to any one of the preceding claims, wherein the cover plate (20) fully covers the top sides (12a) of the battery cells (12).

14. The battery system (100) according to claim 13, wherein the venting sides (13) are arranged at the top sides (12a) of the battery cells (12), the cover plate (20) comprising venting openings aligned with the venting exits of the battery cells (12) for letting the venting gas stream pass through the cover plate (20).

15. An electric vehicle comprising the battery system (100) according to any one of the preceding claims.

## Amended claims

### Amended claims in accordance with Rule 137(2) EPC.

1. A battery system (100), comprising:
a housing accommodating a plurality of battery cells (12) which are arranged to form one or more battery packs, wherein each of the battery cells (12) comprises, at a top side (12a) and/or at a bottom side (12b) thereof, a venting side (13) with a venting exit (14) to exit a venting gas stream from the battery cells (12),
a bottom plate (30) covering the bottom sides (12b) of the battery cells (12),
at least one crossbeam (18) separating neighboring battery cells (12) of the plurality of battery cells (12), the crossbeam (18) arranged with a lower end thereof on the bottom plate (30) and extending from the bottom plate (30) to the top sides (12a) of the neighboring battery cells (12); and
a cover plate (20) extending from one of the neighboring battery cells (12) over the crossbeam (18) to the other one of the neighboring battery cells (12) so as to cover an upper end of the crossbeam (18) and to cover at least partly the top sides (12a) of the neighboring battery cells (12), wherein the cover plate (20) is fixed to the crossbeam (18) via a first fixation member (40),
wherein the bottom plate (30) is fixed to the crossbeam (18) via a second fixation member (42).

2. The battery system (100) according to claim 1, wherein the second fixation member (42) comprise one or more of the following: bolts, screws.

3. The battery system (100) according to any one of the preceding claims, wherein the first fixation member (40) comprise one or more of the following: bolts, screws.

4. The battery system (100) according to any one of the preceding claims, wherein the cover plate (20) covers electrode terminals (16) of the neighboring battery cells (12), the electrode terminals (16) arranged at the top sides (12a) of the neighboring battery cells (12).

5. The battery system (100) according to any one of the preceding claims, wherein the cover plate (20) is fixed to the top sides (12a) of the neighboring battery cells (12).

6. The battery system (100) according to any one of the preceding claims, wherein the cover plate (20) is adapted to the contour of the top side (12a) of the battery cells (12) and the upper end of the crossbeam (18).

7. The battery system (100) according to any one of the preceding claims, wherein the cover plate (20) comprises a mechanically rigid structural layer (22) and a first thermal insulation layer (24, 26).

8. The battery system (100) according to any one of the preceding claims, the battery system (100) comprising a second thermal insulation layer (32) arranged between the crossbeam (18) and one of the adjacent battery cells (12).

9. The battery system (100) according to claim 8, wherein the second thermal insulation layer (32) comprises a woven fabric, the woven fabric preferably comprising glass fibers, basalt fibers and/or mica fibers, and a matrix support material, preferably a resin.

10. The battery system (100) according to any one of claims 7 to 9, wherein the first thermal insulation layer (24, 26) comprises a woven fabric, the woven fabric preferably comprising glass fibers, basalt fibers and/or mica fibers, and a matrix support material, preferably a resin.

11. The battery system (100) according to any one of the preceding claims, wherein the structural layer (22) is a metal layer, preferably a steel layer.

12. The battery system (100) according to any one of the preceding claims, wherein the cover plate (20) fully covers the top sides (12a) of the battery cells (12).

13. The battery system (100) according to claim 12, wherein the venting sides (13) are arranged at the top sides (12a) of the battery cells (12), the cover plate (20) comprising venting openings aligned with the venting exits of the battery cells (12) for letting the venting gas stream pass through the cover plate (20).

14. An electric vehicle comprising the battery system (100) according to any one of the preceding claims.
